# EUROPEAN PATENT SPECIFICATION

(11) **EP 0 816 250 B1**
(45) Date of publication and mention of the grant of the patent: **03.01.2001**
(21) Application number: 97660074.2
(22) Date of filing: 24.06.1997
(51) Int. Cl.: B65D 63/06, B65D 63/14

(54) **Connection device for two superposed strap ends**
Verbindungsvorrichtung für zwei übereinanderliegende Bandenden
Dispositif de connexion pour deux fins de ruban superposées

(30) Priority: 25.06.1996 FI 962615
(43) Date of publication of application: 07.01.1998
(73) Proprietor: Hackman, Patrick, 34450 Jäminkipohja (FI)
(72) Inventor: Hackman, Patrick, 34450 Jäminkipohja (FI)
(74) Representative: Lassenius, Birgitta Maria

(56) References cited:
- DE-C- 814 351
- US-A- 2 611 164
- US-A- 2 642 639
- US-A- 5 217 208

## Description

The object of the invention is a device according to the preamble of Claim 1 and a method according to the preamble of Claim 8.

The purpose of the invention is to provide an inexpensive means which can be used to easily carry out bonding and locking and which does not damage the package and follows along with the package without impeding handling and which can be reused for the same purpose after the package has been untied. Another purpose of the invention is to provide a method for handily making a tight and strong bond for timber packages in particular.

Previously, it has been necessary to use clamping tools and vulcanisation or various types of metallic clasps. When the size or the quantity of the goods to be packed changes, the tie and the joint are wasted because they cannot be reused in the changed conditions. These known solutions easily cause oxidation problems.

Lever block pulleys have also been used with a braided cord firmly attached thereto. The block pulley devices are too expensive to be carried along with the package. Furthermore, they would make the handling and transporting of the packages more difficult.

The present invention eliminates all known disadvantages and provides a very inexpensive, easy-to-use device which can be used to easily and quickly carry out the bonding, which does not damage the package mechanically, does not cause problems with oxidation, and which, in addition, can be reused.

In publication US-2 642 639 a device for tightening and locking the ends of a cargo strap in overlying relationship about a piece of cargo is disclosed. The device comprises a body part similar to a cotton reel and having tool-engaging extensions on each end. A pair of circular flanges is fastened on said tool-engaging ends, one at each end. A slotted keyway is formed on said body between the flanges. The cargo strap is surrounding a timber baffle and the opposite ends thereof are threaded through said keyway, whereafter a tensioning tool is applied to the tool-engaging end or ends of the tightening device. The body is rotated by said tool so that the strap winds about the periphery of the body until proper tension is produced in the strap. Thereafter the body is his position by means of one or more, preferably two keeper pins which are axially threaded through corresponding holes in the circular flanges in a direction parallell with axis of the body. The keeper pins are preventing unwinding of the body by supporting against the strap surrounding the cargo.

Said known device comprises three separate parts, a body and a pair of flanges which is mounted on the body in non-rotary relationship to each other. At least one key is threaded though the aligned holes while keeping the device in strap tensioning position by means of a tool.

The device of the present invention is a much simpler device comprising only one body part. Locking of the body into a strap tensioning position is performed by means of a pin which is inserted into a radial through bore and supported against the surface of the cargo far enough to provide a moment preventing the body from unwinding.

The principle features of the device and the method according to the invention are presented in the characterising clauses of Claim 1 and Claim 8.

The device according to the invention for tightening and locking the tie thus mainly comprises a body part similar to a cotton reel, comprising a slot for the ends of the tie extending in the direction of the rotating axis of the body and going through the body, and at least two radial through bores lying in a plane normal to the rotation axis of said body of the body forming an angle, preferably a right angle, with one another and are located in the direction of the axis spaced from one another. The separate tightening and locking members are successively fitted into said through bores, whereby by turning the members, a rotation of the tightening device is provided. The tightening device is locked into a desired position of rotation with the aid of the tightening member which is fitted into the through bore which is lying in a plane normal to the rotation axis of the body part and turned forward into a position where the tightening member is approximately parallel with the surface of the package. In this position the tightening member is pushed through the through bore so that its tip is supported onto the surface of the package as far as possible from the device. In this position, the tightening device is locked into a non-turning position.

The axial length of the slot is preferably only slightly longer than the width of the tie, and its height perpendicular to the axis is only slightly more than two times the thickness of the tie. Therefore, it is easy to insert the ends of the tie into the slot and they will remain precisely in a superimposed position. The latter fact is significant with respect to friction.

The body part of the tightening device preferably comprises at least four flanges with equal diameters which are symmetrically fitted at the ends of the body part on both sides of the slot. Because of the flanges, the tightening device turns with hardly any friction on the surface of the package. The tie thus remains at a distance from the surface of the package and the friction surface of the device with respect to the surface of the package is relatively small.

The slot of the tightening device can be made to extend to the other end. However, this requires great strength of the manufacturing material of the device and appropriate dimensioning of the device. The tightening device having an open slot can be used with a tie which has been formed into a loop, because the tightening device can simply be threaded on to the tie. In other respects, the tightening device with an open slot works in the same way as the tightening device provided with a closed slot.

The body part of the tightening device can have more than two, for example, three or four through bores to receive the tightening members. The bores are evenly distributed on the peripheral surface of the body part in the direction of the periphery and preferably symmetrically in the length of the device. When the number of bores is three, the angle between the holes is 60° and when the number of bores is four, the angle between the holes is 45°. When the number of bores is increased from two to three or four, the strength of the structure should be taken into account.

The through bores for the tightening device run through the rotational axis of the body part. The slot also preferably runs through the centre line of the body part. Other solutions stress the strength of the device very much and it is of no advantage to move the slot.

The tightening device is preferably manufactured of thermosetting plastic. The manufacture can be carried out by casting or turning, for example.

According to the method the invention the ends of the tie are inserted, from opposite directions, into a slot in the tightening device, whereby the thread is fastened to the tightening device by means of friction and is tightened when the tightening device is turned against the surface of the package. The device is turned, at least at the end of the tightening, with the aid of unfixed tightening members, such as 15 mm (six inch) nails, which one after another are fitted into the radial through bores of the tightening device. There are preferably two through bores and they are preferably located at right angles to each other. Tightening of the tie is thus provided by a very minor force. Locking is effected by a tightening member which is pushed into one of the through bores, the position of which is nearly parallel with the surface of the package. The tightening member is pushed far through the through bore so that its tip is supported by the surface of the package and prevents the tightening device from unwinding.

In the following, a preferred embodiment of the tightening device according to the invention is described with reference to the appended drawings in which:
Fig. 1 shows a tightening device manufactured by turning of thermosetting plastic, as viewed from the front, the scale being 1:1,
Fig. 2 is the cross-section of the tightening device, cut through the slot (the figure is not a cross-section of the side view of Fig. 1 because the slot and the bore are in different positions in Figs. 1 and 2),
Figs. 3a-3c show the tightening device in operation, as viewed from the side and as a cross-section through the slot, and
Fig. 4 shows tightening member 7 on a slightly decreased scale.

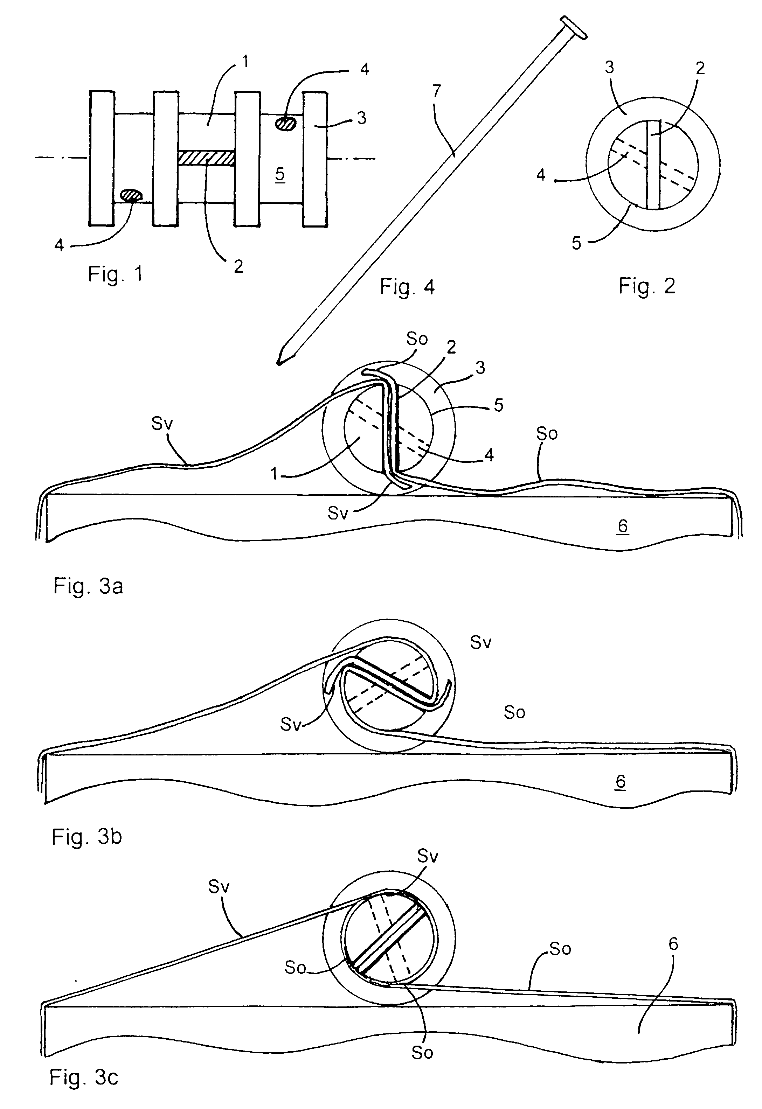

The tightening device according to Fig. 1 comprises body part 1, the peripheral surface of which is marked with number 5. The slot in the direction of the rotating axis of the body part is marked with number 2 and the four rotating flanges with number 3. Slot 2 runs through the rotating axis of the tightening device. The rotating flanges are located on both sides of slot 2 at the ends of the tightening device. The difference between the diameters of the rotating flanges and that of the body part is not big. The empty space between the body part and the surface of the package, formed by the rotating flanges, is, however, large enough to provide free space for the tie. A middlemost slot space and two outer slot spaces are formed between the rotating flanges.

There are two through bores 4, one in the one outer space and the other in the other outer slot space. The bores form a 90° angle with one another in the radial plane. Consequently, the bore openings in the mantel surface 5 of the body part are at a distance of 90° from one another. The angles between the slot and the through bores in the radial plane are not critical. According to Fig. 2, the angle between the slot and one through bore is about 50°.

The draft-like drawings 3a-3c where the width of the package is smaller than normal show the threading of the tie in slot 2 and the locking thereof in the body part by means of friction, and the tightening of the tie around the package resulting from the turning of the body part.

Tightening and locking of timber package ties by using the tightening device according to the invention is carried out in the following way, cf. figures 3a-3c.

Ends S_{V} and S_{O} of the tie are threaded into slot 2 from opposite directions. The projecting ends are preferably left slightly longer than what is shown in the figures to ensure locking by friction. The device is then twisted clockwise in the case presented by the figure, first by hand and, finally, by using tightening members 7. The tightening members are placed alternatingly into one of the through bores 4; in the case of Fig. 3a, into a bore which is not shown and the slope angle of which is more advantageous for providing a rotating force with the aid of tightening member 7. After the subsequent through bore 4 has reached an advantageous position, the second tightening member is placed in it and the previous member is removed from the through bore. This is repeated until the desired tightness has been reached. Normally, enough tie is reserved for providing about one or two rotations, which is enough to secure the ends of the thread to the body part by means of friction. In order to lock the tie in this tightness, the second tightening member 7 is pushed through the bore so that the end of the member extends as far as possible on the surface of the package onto which it is supporting. This through bore should be nearly parallel with the surface of the package in order for the member to be able to extend far enough along the surface of the package to provide a moment that prevents the device from unwinding. Therefore, the tightening member prevents the tightening device from loosening, i.e., from turning counter-clockwise.

The timber package is now ready to be further processed. The tightening device with is tightening member remains attached to the package. When the package is untied, the locking is released in the opposite order, i.e., another tightening member is placed into an empty bore and the tightening device is tightened enough for the locking tightening member to release its grip from the surface of the package so that it can be detached from the device. Thereafter, the opening is rapidly carried out by hand.

As mentioned above, the tightening device can also be provided with an open slot, in which case the device is threaded onto top of an loop of the tie and the twisting is then carried out in the same way as described above.

## Claims

1. A device for tightening and locking a tie (Sᵥ, Sₒ), in particular a tie of a timber bundle (6), the device mainly comprising a body part (1) similar to a cotton reel and flanges (3) integral with it, the body part (1) comprising an axial slot (2) going through the body part for having the ends of the tie (Sᵥ, Sₒ) threaded through the slot, **characterised** in that at least two radial bores (4) are arranged through the body part (1) in a plane normal to the rotation axis of said body part (1), said bores forming an angle, preferably a 90° angle, with one another and being located axially spaced from one another, the bores being arranged for receiving separate tightening and locking members (7).

2. A device according to Claim 1, **characterised** in that the axial length of the slot (2) is approximately the same as the width of the tie, and its height perpendicular to the axial direction is slightly more than twice the thickness of the tie (Sᵥ, Sₒ).

3. A device according to Claim 1 or 2, **characterised** in that the body part (1) comprises four symmetrically fitted flanges (3) of equal dimensions, the two middlemost flanges bordering the slot (2) and the two outermost flanges forming the ends of the body part.

4. A device according to Claim 3, **characterised** in that the body part comprises two bores (4) which are fitted at the ends of the device, one at the one end between its two outermost flanges (3) and the other at the other end between its two outermost flanges.

5. A device according to Claim 1, **characterised** in that the slot (2) is adapted to extend to at least one end of the body part (1).

6. A device according to any of Claims 1 to 5, **characterised** in that the slot (2) is located in the middle plane of the body part (1).

7. A device according to any of Claims 1 to 6, **characterised** in that the device is made of thermosetting plastic.

8. A method for tightening and locking a tie (Sᵥ, Sₒ), in particular a tie of a timber package, around the package (6), wherein the ends of the tie (Sᵥ, Sₒ) are threaded into a slot (2) of a tightening device from opposite directions, said device comprising a body part (1) similar to a cotton reel and flanges (3) integral with it, said axial slot (2) going through said body part (1) for receiving said ends of the tie (Sᵥ, Sₒ), said device further comprising at least two radial bores (4) arranged through the body part (1) in a plane normal to the rotation axis of said body part (1), said bores being spaced from one another in axial direction and being arranged for receiving separate tightening and locking members (7), the tightening device being adapted to be rotated in touch with the surface of the package, the tightening method comprising the steps of rotating the device by means of said tightening members (7) for securing the ends of the tie (Sᵥ, Sₒ) to the tightening device through friction, successively fitting the tightening members (7) into said bores and locking the tightening device into its tightening position by means of one tightening member (7) which is left in the bore (4) in a position supporting against the surface of the package (6) and preventing the device from being unwound.

## Patentansprüche

1. Einrichtung zum Festziehen und Festlegen eines Verbindungsteils (S_{V}, S_{O}), insbesondere eines Verbindungsteils eines Holzbündels (6), wobei die Einrichtung in erster Linie einen Körperteil (1) ähnlich einer Baumwollspindel mit daran integrierten Flanschen (3) enthält, wobei der Körperteil (1) einen den Körperteil durchsetzenden axialen Schlitz (2) enthält, um die Enden der Verbindung (S_{V}, S_{O}) durch den Schlitz zu fädeln,
dadurch gekennzeichnet, dass wenigstens zwei radiale Bohrungen (4) den Körperteil (1) in einer Ebene normal zur Rotationsebene des Körperteils (1) durchsetzen, wobei die Bohrungen miteinander einen Winkel bilden, vorzugsweise einen 90° Winkel und axial voneinander beabstandet sind, wobei die Bohrungen für die Aufnahmen separater Spann- und Festlegeteile 7 ausgebildet sind.

2. Einrichtung nach Anspruch 1,
dadurch gekennzeichnet, dass die axiale Länge des Schlitzes (2) ungefähr gleich der Breite der Verbindung ist und dass dessen Höhe senkrecht zur axialen Richtung etwas mehr als das Doppelte der Dicke der Verbindung (SV, SO) beträgt.

3. Einrichtung nach Anspruch 1 oder 2,
dadurch gekennzeichnet, dass der Körperteil (1) vier symmetrisch passende Flansche (3) gleicher Größe aufweist, wobei die zwei mittleren Flansche den Schlitz (2) begrenzen und die beiden äußeren Flansche die Enden des Körperteils bilden.

4. Einrichtung nach Anspruch 3,
dadurch gekennzeichnet, dass der Körperteil zwei Bohrungen (4) umfaßt, welche an den Enden der Einrichtung ausgebildet sind, eine an dem einen Ende zwischen dessen zwei äußeren Flansche (3) und der andere an dem anderen Ende zwischen dessen zwei äußeren Flansche.

5. Einrichtung nach Anspruch 1,
dadurch gekennzeichnet, dass der Schlitz (2) sich zu mindestens einem Ende des Körperteils (1) erstreckt.

6. Einrichtung nach Anspruch 1 oder 5,
dadurch gekennzeichnet, dass der Schlitz (2) in der mittleren Ebene des Körperteils (1) angeordnet ist.

7. Einrichtung nach einem der Ansprüche 1 bis 6,
dadurch gekennzeichnet, dass die Einrichtung aus einem duroplastischen Kunststoff besteht.

8. Verfahren zum Festziehen und Festlegen einer Verbindung (S_{V}, S_{O}), insbesondere eine Verbindung eines Holzpacks, um den Pack (6), worin die Enden der Verbindung ('SV, SO) von entgegengesetzten Richtungen in den Schlitz (2) einer Festzieheinrichtung gefädelt werden, welche Einrichtung einer Körperteil (1) ähnlich einer Baumwollspindel mit darin integrierten Flanschen (3) enthält, welcher axiale Schlitz (2) den Körperteil (1) durchsetzt, um die Enden der Verbindung (Sᵥ, Sₒ) aufzunehmen, welche Verbindung weiter wenigstens zwei den Körperteil (1) und einer Ebene normal zur Rotationsachse des Körperteils (1) durchsetzende Bohrungen (4) aufweist, welche voneinander in axialer Richtung beabstandet sind und zur Aufnahme separater Festzieh- und Festlegeteile (7) ausgebildet sind, welche Festzieheinrichtung geeignet ist, in Anlage an der Oberfläche des Packs rotiert zu werden, welche Festziehmethode die Schritte des Rotierens der Einrichtung mittels der Festziehteile (7) umfaßt, um die Enden der Verbindung (S_{V}, S_{O}) an der Festzieheinrichtung durch Friktion festzulegen, sukzessives Aufnehmen der Festziehmittel (7) in den Bohrungen und Festlegen der Festzieheinrichtung in ihrer Festziehposition mittels eines Festziehteils (7), welches in der Bohrung (4) in einer Position belassen wird, die gegen die Oberfläche des Packens (6) anliegt und die Einrichtung davon abhält, ausgedreht zu werden.

## Revendications

1. Dispositif pour serrer et verrouiller une sangle de fixation (S_{V}, S_{O}), en particulier une sangle de fixation destinée à un chargement de bois (6), le dispositif comprenant principalement une partie corps (1) similaire à une fusette et des flasques (3) formés venus de matière avec elle, la partie corps ( 1 ) comprenant une fente axiale (2) traversant la partie corps de manière à ce que les extrémités de la sangle de fixation (S_{V}, S_{O}) s'enfilent à travers la fente, caractérisé en ce qu'au moins deux alésages radiaux (4) sont formés à travers la partie corps (1) dans un plan perpendiculaire à l'axe de rotation de ladite partie corps (1), lesdits alésages formant un angle, d'une manière préférée un angle de 90°, l'un par rapport à l'autre et étant axialement espacés l'un de l'autre, les alésages étant conçus pour recevoir des éléments de serrage et de verrouillage (7) séparés.

2. Dispositif selon la revendication 1, caractérisé en ce que la longueur axiale de la fente (2) est à peu près égale à la largeur de la sangle de fixation, et en ce que sa hauteur, perpendiculairement à la direction axiale, est légèrement supérieure à deux fois l'épaisseur de la sangle de fixation (S_{V}, S_{O}).

3. Dispositif selon la revendication 1 ou 2, caractérisé en ce que la partie corps (1) comprend quatre flasques (3), disposés symétriquement, de dimensions égales, les deux flasques intermédiaires se situant de part et d'autre de la fente (2) et les deux flasques les plus extérieurs formant les extrémités de la partie corps.

4. Dispositif selon la revendication 3, caractérisé en ce que la partie corps comprend deux alésages (4) qui sont formés aux extrémités du dispositif, l'un à la première extrémité située entre ses deux flasques les plus extérieurs (3) et l'autre à l'autre extrémité située entre ses deux flasques les plus extérieurs.

5. Dispositif selon la revendication 1, caractérisé en ce que la fente (2) est adaptée pour s'étendre jusqu'à au moins une extrémité de la partie corps (1).

6. Dispositif selon l'une quelconque des revendications 1 à 5, caractérisé en ce que la fente (2) se situe dans le plan médian de la partie corps (1).

7. Dispositif selon l'une quelconque des revendications 1 à 6, caractérisé en ce que le dispositif est formé en matière plastique thermodurcissable.

8. Procédé pour serrer et verrouiller une sangle de fixation (S_{V}, S_{O}), en particulier une sangle de fixation destinée à un chargement de bois, autour du chargement (6), dans lequel les extrémités de la sangle de fixation (S_{V}, S_{O}) sont enfilées dans une fente (2) d'un dispositif de serrage depuis des directions opposées, ledit dispositif comprenant une partie corps (1) similaire à une fusette et des flasques (3) formés venus de matière avec elle, ladite fente axiale (2) traversant ladite partie corps (1) pour recevoir lesdites extrémités de la sangle de fixation (S_{V}, S_{O}), ledit dispositif comprenant en outre au moins deux alésages radiaux (4) formés à travers la partie corps (1) dans un plan perpendiculaire à l'axe de rotation de ladite partie corps (1), lesdits alésages étant mutuellement espacés dans la direction axiale et étant conçus pour recevoir des éléments de serrage et de verrouillage (7) séparés, le dispositif de serrage étant adapté pour tourner en contact avec la surface du chargement, le procédé de serrage comportant les étapes consistant à faire tourner le dispositif par l'intermédiaire desdits éléments de serrage (7) pour fixer par friction les extrémités de la sangle de fixation (S_{V}, S_{O}) au dispositif de serrage, insérer successivement les éléments de serrage (7) dans lesdits alésages et verrouiller le dispositif de serrage dans sa position de serrage en laissant un élément de serrage (7) dans l'alésage (4) dans une position de support contre la surface du chargement (6) et empêchant le dispositif d'être desserré.
